# EUROPEAN PATENT APPLICATION

(11) **EP 0 589 559 A2**
(43) Date of publication of application: **30.03.1994**
(21) Application number: 93306181.4
(22) Date of filing: 05.08.1993
(51) Int. Cl.: H02H 3/00

(54) **Input protection circuit for power converter**

(30) Priority: 13.08.1992 US 928572
(71) Applicant: AT&T Corp., New York, NY 10013-2412 (US)
(72) Inventor: Rene, Raymond, Richardson, Texas 75082 (US)
(74) Representative: Buckley, Christopher Simon Thirsk

(57) **Abstract**

An input circuit for a power converter (101) that is powered over a long copper supply line (151,152) having a variable length up to 10 km includes a multipurpose protection circuit for protection against line and converter faults (by 107,161,165,117,119) and in addition provides lightning protection (by 141,142,143,104).

## Description

### Field of the Invention

This invention relates to an input protection circuit for a power converter.

### Background of the Invention

In many applications of power converters, power to energize the converter must be supplied over a power line having a significant length. Such applications frequently occur when local powering of the power converter is not deemed suitable. A typical example is cable and telephony applications where power converters at a customer site are powered from some central distant location.

Powering a power converter over a power line of great length requires special protection of both the power converter and the power line itself. The current supplied to the power converter must be limited to protect both the power line and the power converter. Faults in the power line itself could be a fire hazard. A fault in the power converter could also cause dangerous current levels in the line. There is the further danger of lightning strikes on the power line. Additional protection is needed for in-rush current at start up and various power crosses of the line that may occur. Provision of individual protection circuits for each of these occurrences increases the cost and complexity of the power circuit.

### Summary of the Invention

An input power protection circuit for a power converter according to this invention is provided as claimed in claim 1.

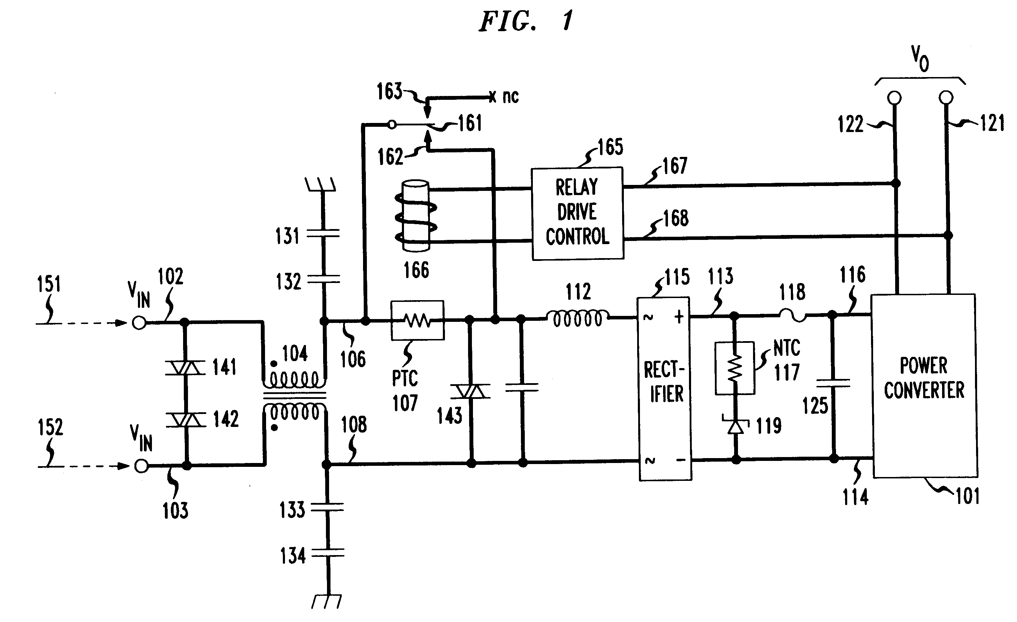

### Brief Description of the Drawing

In the Drawing:
The sole figure discloses a schematic of an input circuit of a power converter including protection against line faults, converter faults and lightning.

### Detailed Description

An input circuit connected to a power converter circuit 101 is shown in the sole figure. Power is supplied over input lines 151 and 152 which in practice may be 22 ga twisted pair wire of up to 10 Km in length. Power, from the input lines 151 and 152, is accepted at two input terminals 102 and 103 and coupled to the common mode inductor 104 which in combination with capacitors 131, 132 133 and 134 form a line filter and transient suppressor.

An electrical line 106 connects the inductor 104 to a positive temperature coefficient thermistor 107 and from thence to an inductor 112. The second winding of common mode inductor 104 is connected to a second electrical line 108. The inductor 112 and the electrical line 108 are connected to a bridge rectifier 115. The output lines 113 and 114 of the bridge rectifier 115 are connected to a shunt circuit including a negative temperature coefficient thermistor 117 and a breakdown diode 119. Line 113 is further connected, via a fuse 118, to an input of the power converter 101. Line 114 is directly connected to the power converter 101 The output of converter 101 is provided on output leads 121 and 122.

In operation a source of electrical energy is supplied across the input terminals 102 and 103. This source of energy may be an AC or DC voltage source. The input line is shunted by two MOV bidirectional transient suppressors 141 and 142 which are operative to provide a clamping action to limit the maximum voltage at the input of the converter 101. The series impedance of the common mode inductor 104 and the MOV 143 further attenuate voltage developed across the series connected MOVs 141 and 142. The three MOVs 141, 142 and 143 in combination with the common mode inductor 104 provide protection against lightning transients of up to 6Kv.

Input current is routed through the relay contact 161 which is normally connected to the terminal 162. This path circumvents the path through the thermistor device 107 and applies the current to the inductor 112. The inductor 112 and lead 108 are connected to the rectifier 115. The DC output of rectifier 115 is conducted via fuse 118 and leads 114 and 116 to the input of the power converter 101.

The connection of the relay contact 161 to either terminal 162 or 163 is controlled by a relay drive control 165 which controls the biasing of the relay coil 166. Relay drive control 165 is connected to monitor an output voltage at leads 121 and 122 of the power converter 101, via leads 167 and 168. Normally the coil 166 is energized causing the relay contact 161 to be connected to relay terminal 162 to provide a line bypass around thermistor 107.If the output voltage of the converter 101 drops the relay drive control 165 biases the coil 166 to cause relay contact 161 to connect to the terminal 163, thereby inserting the positive temperature coefficient thermistor 107 directly into the input current path of the converter 101.

Hence if an internal fault in the converter circuit occurs, the resulting dip in the output voltage of the converter causes the coil to be de-energized. This places the positive temperature coefficient thermistor 107 directly in series with the line and in the illustrative embodiment limits the line current to less than one amp.

The thermistor relay circuit is cooperative with the series circuit comprising negative temperature coefficient thermistor 117 and a breakdown diode 119 to provide protection against line induced faults such as caused by power crosses. Such faults may cause fires and the voltage induced must be limited to some predetermined threshold value. This value in the illustrative embodiment is 200 volts or less. Hence when the line voltage exceeds 200 volts the breakdown diode 119 breaks down and the series circuit of breakdown diode 119 and thermistor 117 limits the voltage of the bulk capacitor 125 to 200 volts. If the line voltage increases beyond 200 volts the breakdown diode 119 fails in a short state and discharges the capacitor 125. The resulting voltage drop in the converter 101 in turn causes the positive temperature coefficient thermistor 107 to be inserted directly in series with the line as described above.

In providing protection against lightning transients, three stage of protection are provided. As described above the two MOV bidirectional transient suppressors 141 and 142 provide initial clamping to limit the maximum input voltage applied to the converter 101. The series impedance provided by the common mode inductor 104 and the MOV bidirectional transient suppressor 143 attenuates the voltage developed across the two MOV bidirectional transient suppressors 141 and 142. Internal protection to the converter 101 is provided by the inductor 112 and the series connected thermistor 117 and breakdown diode 119 shunted across the converters input.

In-rush current protection is initially provided by the thermistor 107. After the output voltage of the converter 101 rises, the thermistor is disconnected from the line as the secondary voltage energizes the coil 166 and the thermistor 107 is bypassed by the input line.

## Claims

1. A power converter system protection circuit, including an input circuit connected to an input of a power converter circuit having a storage capacitor (125) at the input of the power converter, the input circuit including input terminals (102,103) for connection to a power supply line (151,152) of significant length, first and second input lines (106,108) connecting the input terminals to the input of (113,114) the power converter circuit, and CHARACTERISED BY a multi-function protection circuit connected between the input terminals and the input of the power converter circuit, including a first thermistor (107) connected in the first line, a bypass including a switch (161) connected to allow the first line to bypass the first thermistor when the switch is closed, control circuitry (166,165) for closing the switch in response to a drop in an output voltage of the converter, and a second thermistor (117) included in a circuit connected across the storage capacitor, whereby the control circuitry serves to operate the switch to include the first thermistor in the line when a converter fault causes a drop in converter output voltage, and the second thermistor serves to discharge the storage capacitor in response to a fault in the line of significant length and thereby induce a drop in an output voltage of the converter.

2. A power converter system protection circuit as claimed in claim 1, wherein the first thermistor is a positive temperature coefficient thermistor.

3. A power converter system protection circuit as claimed in claim 1 or 2, wherein the second thermistor is a negative coefficient thermistor.

4. A power converter system protection circuit as claimed in claim 1, 2 or 3, including a transient suppressor (141,142) connected across the input terminals.

5. A power converter system protection circuit as claimed in claim 4, including an additional transient suppressor (143) connecting the first line to the second line at the location of the first thermistor.

6. A power converter system protection circuit as claimed in any preceding claim wherein the circuit connected across the storage capacitor includes the second thermistor and a breakdown diode (119) in series connection.
